(19) Europäisches Patentamt
European Patent Office
Office européen des brevets

(11) **EP 1 816 465 B1**

(12) **EUROPEAN PATENT SPECIFICATION**

(45) Date of publication and mention
of the grant of the patent:
**19.11.2008 Bulletin 2008/47**

(51) Int Cl.:
**G01N 21/89** *(2006.01)*   **G01B 11/25** *(2006.01)*

(21) Application number: **07250447.5**

(22) Date of filing: **02.02.2007**

(54) **Surface defect inspection apparatus, surface defect inspection method, and computer program product**

Vorrichtung und Verfahren zur Untersuchung von Oberflächenfehlern sowie Computerprogrammprodukt

Appareil d'inspection des défauts de surface, procédé d'inspection des défauts de surface, et produit de programme informatique

(84) Designated Contracting States:
**DE ES FR GB IT NL**

(30) Priority: **02.02.2006 JP 2006025755**

(43) Date of publication of application:
**08.08.2007 Bulletin 2007/32**

(73) Proprietor: **Ricoh Company, Ltd.**
**Tokyo 143-8555 (JP)**

(72) Inventor: **Kamada, Teruki,**
**c/o Ricoh Co., Ltd**
**Tokyo 143-8555 (JP)**

(74) Representative: **Mounteney, Simon James**
**Marks & Clerk**
**90 Long Acre**
**London**
**WC2E 9RA (GB)**

(56) References cited:
**EP-A1- 0 491 555**      **JP-A- 11 118 730**
**JP-A- 2004 279 367**    **US-A- 4 349 277**
**US-A- 5 331 369**       **US-A- 5 557 410**
**US-A- 5 636 025**       **US-A- 5 646 733**
**US-A1- 2005 046 873**

**Description**

BACKGROUND OF THE INVENTION

1. Field of the Invention

The present invention relates to a surface-defect inspection apparatus, a surface defect inspection method, and a surface defect inspection program, and, more particularly to a technique of detecting a defect using a one-dimensional imaging unit.

2. Description of the Related Art

Conventionally, a uniform light is irradiated onto the surface of a tested object, and a distribution of a reflected light is imaged, thereby detecting damage, unevenness, and stains on the surface of the tested object from the taken image.

Particularly, when a measured object is an object extended on the flat surface of roll paper or a sheet, or a cylindrical object, a line sensor is generally used as an imaging unit. The line sensor scans the measured object that moves or rotates on the line sensor, thereby obtaining a surface image and detecting a defect.

In detecting a defect in this way, a relative position between a light-receiving position of the reflection light and the line sensor can change due to a distortion of a shape of the tested object, an unsteady rotation, or vibration. In this case, a position of the defect on the surface of the measured object is detected by error sometimes due to this relative positional change.

According to a technique described in Japanese Patent Application Laid-open No. 2004-279367, an area sensor is provided in addition to a line sensor. When this area sensor receives a reflection light, a reflection light position of the measured object can be obtained. A position of the line sensor is controlled based on the reflection light position to make it possible to accurately detect a defect from the measured object.

According to the technique described in Japanese Patent Application Laid-open No. 2004-279367, an area sensor is used in addition to a line sensor that detects a defect of the tested object. This configuration makes the apparatus complex, and directly increases the cost of the apparatus. Because plural sensors are used, it becomes necessary to adjust and calibrate a relative positional relationship between the sensors. Therefore, after the introduction, the number of maintenance steps increases.

SUMMARY OF THE INVENTION

It is an object of the present invention to at least partially solve the problems in the conventional technology.

According to a first aspect of the invention there is provided a surface-defect inspection apparatus as set out in Claim 1. Preferred features of this aspect are set out in Claims 2-9.

According to a second aspect of the invention there is provided a surface-defect inspection method as set out in Claim 10. Preferred features of this aspect are set out in Claims 2-18.

According to a third aspect of the invention there is provided a computer program product as set out in Claim 19.

The above and other objects, features, advantages and technical and industrial significance of this invention will be better understood by reading the following detailed description of presently preferred embodiments of the invention, when considered in connection with the accompanying drawings.

BRIEF DESCRIPTION OF THE DRAWINGS

Fig. 1 is a perspective view of a configuration of a surface-defect inspection apparatus according to a first embodiment of the present invention;
Fig. 2 is a schematic for explaining a state that a line light source of the surface-defect inspection apparatus according to the first embodiment irradiates a pattern light to a tested object;
Fig. 3 is another example of a pattern light that the line light source of the surface-defect inspection apparatus irradiates;
Fig. 4 is a graph of a change of brightness on an image line taken by a line sensor of the surface-defect inspection apparatus according to the first embodiment.
Fig. 5 is a schematic for explaining a two-dimensional reflection light quantity distribution obtained near the line sensor, by a reflection light of a pattern light that the line light source of the surface-defect inspection apparatus according to the first embodiment irradiates to the tested object;

Fig. 6 is a block diagram of a configuration of a casing of the surface-defect inspection apparatus according to the first embodiment;

Fig. 7 is a schematic for explaining a change of an imaged pattern light when the tested object is deflected;

Fig. 8 is a schematic for explaining a change of an imaged pattern light when the line sensor moves;

Fig. 9 is a schematic of a pattern light irradiated by a line light source prepared for explaining a phase change as an example different from the first embodiment;

Fig. 10 is a schematic for explaining an image obtained by combining line images taken by the line sensor when the measured object makes an unsteady rotation in the state that the pattern light shown in Fig. 9 is irradiated;

Fig. 11 is a graph of a change of a phase of a predetermined cycle in a main scanning direction while the tested object detected by a phase detector of the surface-defect inspection apparatus according to the first embodiment makes one rotation;

Fig. 12 is a graph of a change of a phase of a predetermined cycle after a noise removing unit of the surface-defect inspection apparatus according to the first embodiment removes noise;

Fig. 13 is a schematic for explaining a change of a stripe when a position of the line sensor is controlled;

Fig. 14 is a flowchart of a process procedure from the imaging by the line sensor of the surface-defect inspection apparatus according to the first embodiment until the control of a movement of the line sensor;

Fig. 15 is a schematic for explaining a state that a line light source according to a second embodiment of the present invention irradiates a pattern light to a tested object; and

Fig. 16 is a block diagram of a configuration of a casing of a surface-defect inspection apparatus according to the second embodiment.

## DETAILED DESCRIPTION OF THE PREFERRED EMBODIMENTS

Exemplary embodiments according to the present invention will be explained below in detail with reference to the accompanying drawings.

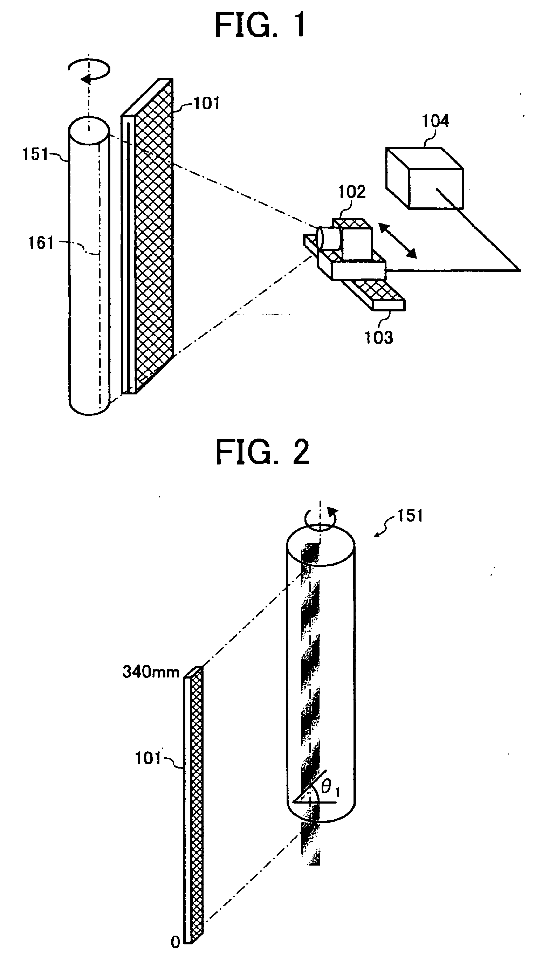

Fig. 1 is a perspective view of a configuration of a surface-defect inspection apparatus 100 according to a first embodiment of the present invention. The surface-defect inspection apparatus 100 includes a line light source 101, a line sensor 102, a linear stage 103, and a casing 104, and inspects presence of a defect on the surface of a rotating tested object (i.e., inspection target object) 151.

The tested object 151 can have any shape. In the first embodiment, an example of a photosensitive drum formed in a cylindrical shape is explained. When the tested object 151 rotates, a test position to which the line light source 101 described later irradiates a pattern light moves along time. Accordingly, the line sensor 102 can test the surface of one rotation of the tested object 151.

The line light source 101 irradiates a pattern light having a predetermined pattern in a longitudinal direction of the tested object, to the rotating tested object.

Fig. 2 is a schematic for explaining a state that the line light source 101 irradiates a pattern light to the tested object 151. As shown in Fig. 2, the pattern light irradiated by the line light source 101 includes a stripe having brightness differentiated in a sub-scanning oblique direction, and the brightness in a main scanning direction imaged by the line sensor 102 changes in a predetermined cycle. This stripe is inclined by an angle $\theta_1$ relative to the sub-scanning direction.

Although there is no particular limit to a predetermined cycle in which the above brightness changes, the cycle is set to ten or more times of the size of a defect to be detected in the first embodiment. For example, when the size of a defect to be detected is about 0.1 to 3 millimeters, a cycle in which brightness changes is set to 30 millimeters or more. When the cycle is set like this, the casing 104 described later decreases the effect that the pattern light gives at the time of detecting a defect. In other words, an erroneous detection of a defect can be decreased.

The line light source 101 can use any means to irradiate a pattern light. In the first embodiment, the line light source 101 is covered with a mask assigned with a pattern. In addition to the covering with a mask, a light emission pattern of the line light source can be controlled.

As explained above, when the brightness of the pattern light has an inclination, the line sensor 102 described later can detect a distance between the inspection position of the tested object 151 and the line sensor 102, that is, a movement of the inspection position of the tested object generated due to an eccentricity or an unsteady rotation. Details thereof will be described later.

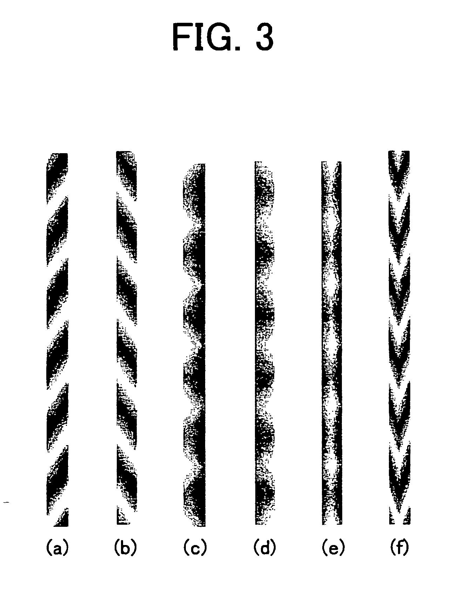

A pattern light irradiated by the line light source 101 can be the one having a change of brightness in the sub-scanning direction, and is not limited to the above pattern light. Fig. 3 is another example of a pattern light irradiated by the line light source. It can be confirmed from examples shown in (a) to (f) in Fig. 3 that the brightness of the pattern light has a change in the sub-scanning direction.

In (a), (b), and (c) in Fig. 3, the brightness of a pattern light changes in one direction in the same cycle, respectively. When these patterns are used, a movement of an inspection position of the tested object can be detected by obtaining a change of a phase on the imaged line of brightness of a one-dimensional pattern light imaged by the line sensor 102. In (c) to (f) in Fig. 3, a ratio of brightness and darkness and average brightness of a one-dimensional pattern light in the main scanning direction are differentiated according to a position in the sub-scanning direction. With this arrangement, a movement of an inspection position of the tested object can be detected by a ratio of brightness and darkness or average brightness of a one-dimensional pattern light imaged by the line sensor.

The line sensor 102 images the tested object 151 that rotates in the sub-scanning direction in the main scanning direction. Reference numeral 161 shown in Fig. 1 indicates an imaged line taken by the line sensor 102.

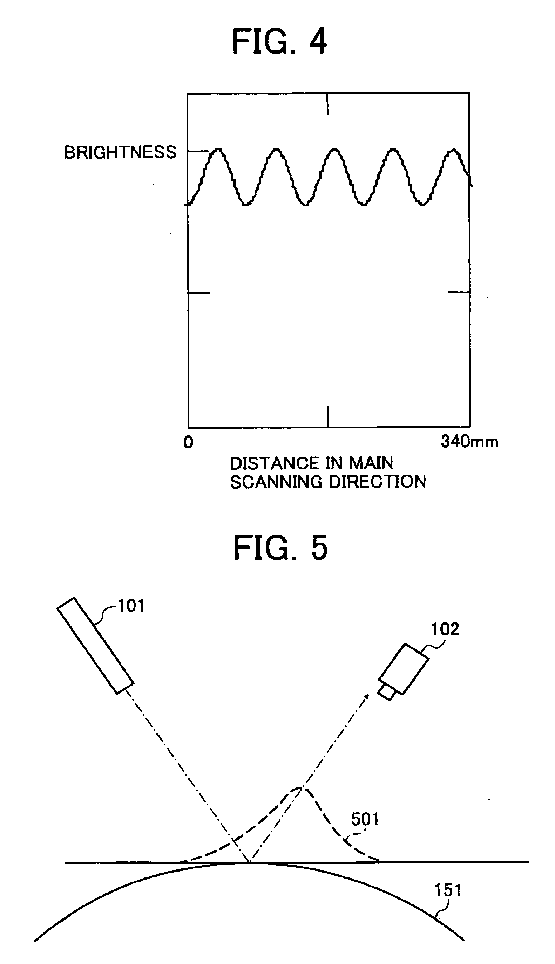

Fig. 4 is a graph of a change of brightness on the imaged line taken by the line sensor 102. As shown in Fig. 4, the brightness of the imaged line taken by the line sensor 102 cyclically changes according to a position in the main scanning direction. This change of brightness is formed by the pattern of the above pattern light.

Fig. 5 is a schematic for explaining a two-dimensional reflection light quantity distribution obtained near the line sensor 102, by a reflection light of a pattern light that the line light source 101 irradiates to the tested object 151. As shown in Fig. 5, it can be confirmed that a reflection light quantity distribution 501 reflected to the tested object 151 is distributed to a sub-scanning direction.

When an abnormal part such as a projection is present on the tested object 151, a scattering direction of the reflection light becomes not constant. Therefore, the scattering distribution of the reflected light becomes wide, or an angle at which a regular reflection light is generated changes. The line sensor 102 images the reflection light, and the casing 104 described later analyzes the line image of the imaged line, thereby detecting an abnormal part of the tested object 151.

The line image according to the first embodiment is one-dimensional image data obtained by the line sensor 102. The imaged line image can be any image when a change of brightness of a reflected pattern light can be detected from this image.

During a rotation of the tested object 151 to carry out a test, a relative distance between an inspection position of the tested object 151 and an installation position of the line sensor 102 changes due to a mild uneven surface of the tested object 151 which is not a defect. When this distance changes, brightness of the reflected light of the pattern light imaged by the line sensor 102 changes. A contribution rate of the variation of the brightness when the relative distance between the tested object 151 and the line sensor 102 changes is different depending on an angle formed between a direction from an inspection position of the tested object 151 to the line sensor 102 and a direction of a changed position of the tested object 151. The contribution rate represents a rate of a changed quantity of a phase detected by the line sensor 102 to a changed quantity of a position of the tested object 151.

In other words, when an angle formed by a line between the line light source 101 and the tested object 151 and a line between the line sensor 102 and the line light source 101 becomes 90 degrees, a contribution rate when the tested object 151 moves to a lateral direction becomes equal to a contribution rate when the tested object 151 moves to a depth direction. However, detection precision is affected more by a change of an angle component, that is, a change of the tested object 151 in a direction perpendicular to the line sensor 102, than a change of a reflection surface of the tested object 151. Therefore, it is preferable that the angle formed by a line between the line light source 101 and the tested object 151 and a line between the line sensor 102 and the line light source 101 is smaller than the above angle.

According to the conventional practice, a defect is detected without controlling the line sensor 102, so that a relative distance between an inspection position of the tested object 151 and a position of the line sensor 102 becomes constant. However, detection sensitivity of detecting unevenness is different depending on a distance between the imaging position of the line sensor 102 and a bright-line. In other words, only a defect having no problem can be detected even when the detection sensitivity changes. The bright-line connects between crests of a reflection light quantity distribution of light reflected from the tested object 151.

Because a change of a relative position between the tested object 151 and the line sensor 102 is not detected as a defect, a position of low sensitivity, that is, an area having a small light quantity in the reflection light quantity distribution is conventionally set as a position to be imaged by the line sensor 102. However, when the line sensor 102 is set in this way, a defect candidate that can be accurately detected at a position of high sensitivity is erroneously detected.

On the other hand, according to the surface-defect inspection apparatus 100 of the first embodiment, the line sensor 102 images a reflection light of the pattern light, and the casing 104 analyzes this reflection light, and controls a position of the line sensor 102 based on a result of the analysis. Accordingly, the surface-defect inspection apparatus 100 can keep the relative position between the inspection position of the tested object 151 and the position of the line sensor 102, at substantially a constant level. Therefore, a position of low sensitivity does not need to be the imaging point, unlike the conventional practice. In other words, because the line sensor 102 can be set at a position having highest precision of detecting a defect in the reflection light quantity distribution, detection precision can be increased.

With reference to Fig. 1, the casing 104 described later detects a defect such as an abnormal part of the tested object 151, and also detects a movement of the position of the tested object 151, based on the brightness of the one-dimensional pattern light imaged by the line sensor 102.

The linear stage 103 is mounted with the line sensor 102, and guides the movement of the line sensor 102 to a sub-scanning direction. The position of the line sensor 102 that moves on the linear stage 103 is controlled by the casing 104 (described later). The linear stage 103 guides the moving direction of the line sensor 102, thereby facilitating the control of the position.

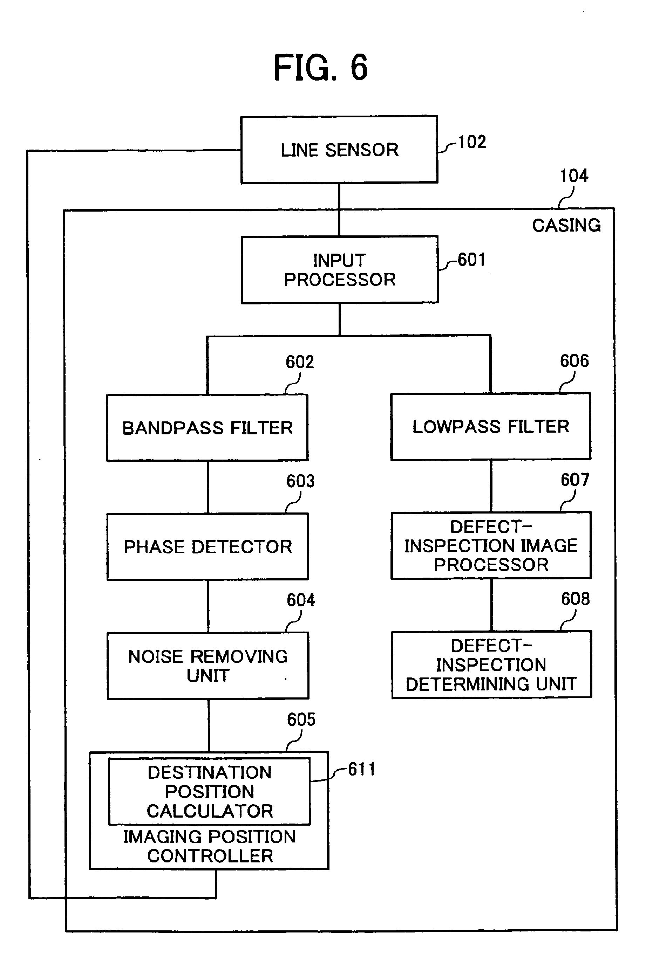

Fig. 6 is a block diagram of a configuration of the casing 104 according to the first embodiment. The casing 104 shown in Fig. 6 includes an input processor 601, a bandpass filter 602, a phase detector 603, a noise removing unit 604, an imaging position controller 605, a lowpass filter 606, a defect-inspection image processor 607, and a defect-inspection determining unit 608. The casing 104 inspects a defect on the surface of the tested object 151 based on a signal input from the line sensor 102, and detects a movement of a position of the tested object 151 by the signal, thereby controlling the movement of the line sensor 102.

The input processor 601 inputs a signal transmitted from the line sensor 102.

The lowpass filter 606 filters a signal input by the input processor 601, and removes a frequency component indicating a change of brightness in the main scanning direction of a pattern light irradiated by the line light source 101. Accordingly, erroneous detections of a defect of the tested object 151 based on a change of brightness of a pattern light decrease, and defect detection precision improves.

The defect-inspection image processor 607 generates a surface image indicating a change of brightness of the surface of the tested object 151, from the signal from which a frequency component of the brightness of the pattern light is removed. The defect-inspection determining unit 608 detects a defect of the surface of the tested object 151 from the surface image. Generation of the surface image carried out by the defect-inspection image processor 607 and detection of a defect carried out by the defect-inspection determining unit 608 can be based on any one of known methods.

The bandpass filter 602 filters a signal input by the input processor 601, and extracts a frequency component indicating a change of pattern brightness in the main scanning direction of pattern light irradiated by the line light source 101. Accordingly, precision of detecting a phase of the frequency component improves.

The phase detector 603 detects a change of a phase, from a signal of a frequency component indicating a change of brightness of a pattern in the main scanning direction of a pattern light. When this change of a phase is detected, a variation between the position of the line sensor 102 and the position of the tested object 151 can be detected.

In other words, when a relative positional relationship between the position of the line sensor 102 and the position of the tested object 151 changes, the position of the tested object 151 imaged by the line sensor 102 deviates to a sub-scanning direction. In this case, because a stripe enters in a sub-scanning oblique direction based on the reflection light of the imaged pattern light, the phase of the frequency component of the pattern light imaged in the imaged line is deviated.

This means that when the phase detector 603 detects a quantity of the phase component of the cycle of the pattern light, the position imaged by the line sensor 102 can be detected. Because the position of the imaged pattern light can be specified, the imaging position controller 605 described later can control the position of the line sensor 102.

A change of a phase component of the cycle of the imaged line taken by the line sensor 102 is due to a change of the tested object 151 or a change of the position of the line sensor 102. As one example of a change of the tested object 151, an eccentricity of the tested object 151 is explained.

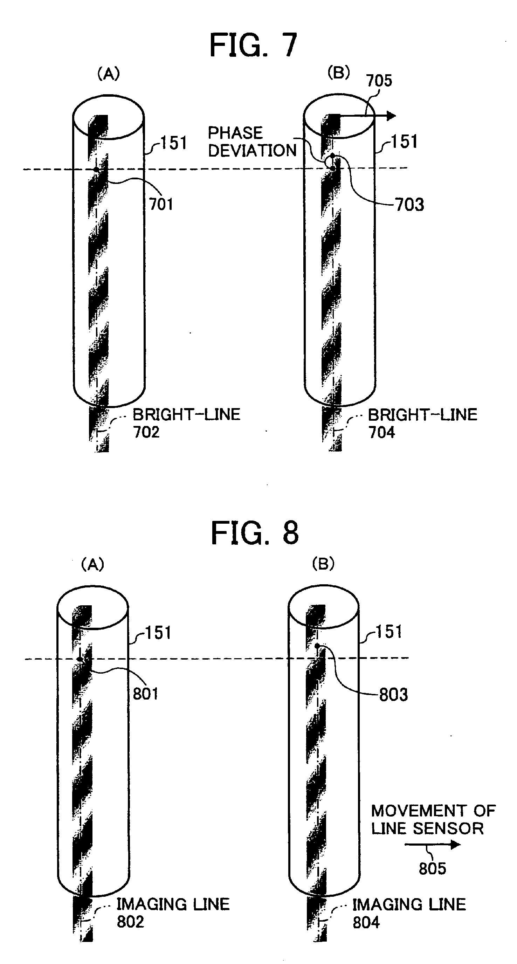

Fig. 7 is a schematic for explaining a change of the imaged pattern light when the tested object 151 is eccentric. In Fig. 7, (A) represents the tested object 151 before the tested object 151 is eccentric, and reference numeral 702 denotes a brightest bright-line of the pattern light. A point 701 on the bright-line 702 is one of points at which brightness is highest on the bright-line 702. In Fig. 7, (B) represents the tested object 151 after it is eccentric, and reference numeral 704 denotes a bright-line. An arrowhead 705 indicates an eccentricity direction. The bright-line 704 moves to an eccentricity direction of the tested object 151 as compared with the bright-line 702, along the eccentricity of the tested object 151. Therefore, it can be confirmed that a point 703 as one of points at which brightness is highest on the bright line 704 moves to a direction of an upper end direction of the tested object 151 on the paper, as compared with the point 701 before the eccentricity.

Although not shown in Fig. 7, the above movement also occurs in the imaged line on the tested object 151 imaged by the line sensor 102. Specifically, a point at which brightness is highest on the imaged line moves to an upper direction of the tested object 151 on the paper, as compared with the position before the eccentricity. In other words, when a change of eccentricity occurs in the tested object 151, a phase changes by a frequency component indicating a change of the brightness of the pattern light, on the imaged line taken by the line sensor 102.

When the tested object 151 is eccentric to the direction of the arrowhead 705, and when the line sensor 102 images the left side of the bright-line 702 on the paper, the bright-line moves to a direction away from the line sensor 102. When the line sensor 102 images the right side of the bright-line 702 on the paper, the bright-line moves to a direction toward the line sensor 102.

A case when the position of the line sensor 102 changes is explained next. Fig. 8 is a schematic for explaining a change of an imaged pattern light when the position of the line sensor 102 changes. In Fig. 8, (A) represents the tested object 151 before the position of the line sensor 102 changes, and an imaged line 802 indicates a line obtained by the line sensor 102. A point 801 on the imaged line 802 is one of points at which brightness is highest on the imaged line 802. In Fig. 8, (B) represents the tested object 151 after the line sensor 102 varies, and the imaged line 804 indicates a line imaged by the line sensor 102. An arrowhead 805 indicates a direction of the movement of the line sensor 102. The imaged line 804 moves to a moving direction of the line sensor 102 as compared with the imaged line 802, following the movement of the line sensor 102. Therefore, it can be confirmed that a point 803 as one of points at which brightness is highest on the imaged line 804 also moves to a an upper end direction of the tested object 151 on the paper, as compared with the point 801 before the eccentricity.

As explained above, when the line sensor 102 moves to the direction of the arrowhead 805, and when the line sensor 102 images the left side of the bright-line 702 on the paper, the line sensor 102 moves to a direction toward the bright-line. When the line sensor 102 images the right side of the bright-line 702 on the paper, the line sensor 102 moves to a direction away from the bright-line.

As explained above, a positional relationship between the bright-line and the imaged line taken by the line sensor 102 needs to take into account the above various conditions. However, according to the first embodiment, the position of the line sensor 102 is not controlled using the positional relationship between the bright-line and the imaged line. Therefore, it is not necessary to take into account these conditions. Specifically, when a phase of the imaged line is deviated due to a movement of the tested object 151, the imaging position controller 605 described later controls the line sensor 102 to further move to a position in the phase deviation direction.

The reasons for the above are explained. First, when the tested object 151 is eccentric to the sub-scanning advancing direction, the line sensor 102 needs to be moved to the same sub-scanning advancing direction to enable the line sensor 102 to image the same position as that before the eccentricity. The tested object 151 and the line sensor 102 are moved to the sub-scanning advancing direction, because the phase of the imaged line is deviated to the same direction, as shown in Fig. 7 and Fig. 8. When the movement of the phase of the line sensor 102 is controlled in this way, the moving direction of the line sensor 102 can be easily specified, regardless of the installation position or the current position of the line sensor 102.

As explained above, when a movement like eccentricity occurs in the tested object 151, the phase detector 603 can detect a change of the phase, from the signal input by the bandpass filter 602.

The noise removing unit 604 removes noise from the phase detected by the phase detector 603. The detection of the phase of the reflected pattern light is stable against the movement of the tested object 151, in comparison with the detection of a change of the reflection quantity. However, there is an influence of measurement noise. To cut the imaging noise component, the noise removing unit 604 has a noise removing filter between the phase detector 603 and the imaging position controller 605. Accordingly, measurement noise can be decreased.

An average value filter, a lowpass filter, and a median filter are available as filters that can be used in the noise removing unit 604. These filters can be mounted based on the assumption that a change due to an assumed eccentricity does not have a high frequency component.

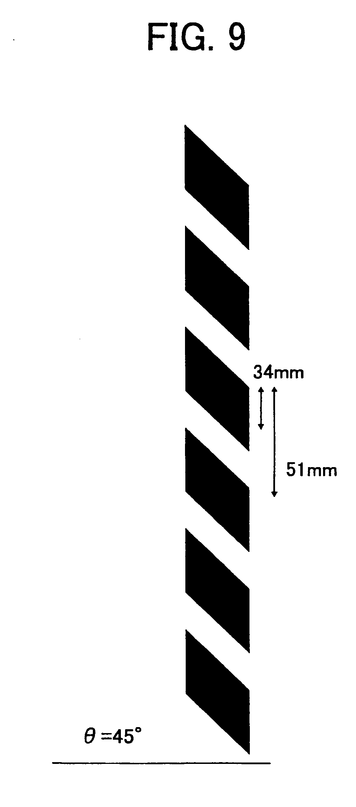

A line image taken when a measured object generates an unsteady rotation is explained. Fig. 9 is a schematic of a pattern light irradiated by the line light source 101. In Fig. 9, a light-shaded area and a light-irradiated area are clearly divided to facilitate the explanation, unlike these areas in the first embodiment.

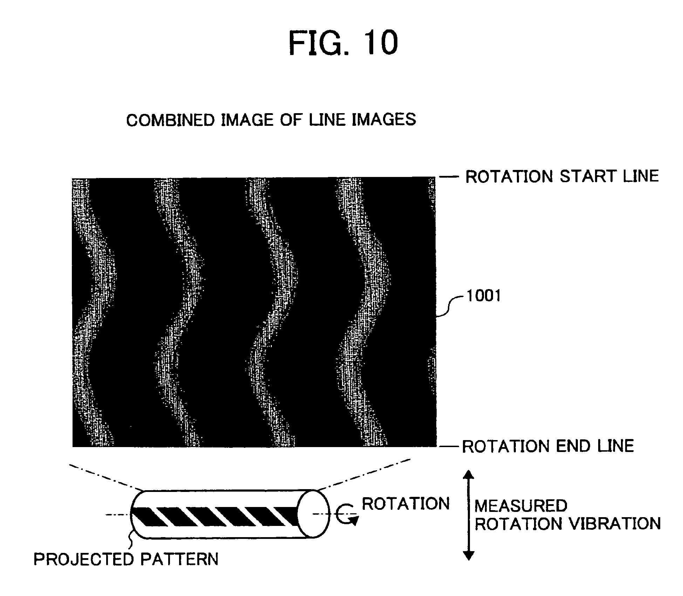

Fig. 10 is a schematic for explaining an image obtained by combining line images taken by the line sensor 102 when the measured object makes an unsteady rotation in the state that the pattern light shown in Fig. 9 is irradiated. As shown in Fig. 10, when the measured object generates an unsteady rotation, an area of the measured object to which light is irradiated from the line light source 101 becomes different, and a phase of the line image obtained by the line sensor 102 becomes different. An image 1001 is obtained by combining line images taken during a period from the start of the rotation until the end of the rotation. As shown in Fig. 10, it can be confirmed that a bright area and a dark area draw curves, based on a change of a phase due to the unsteady rotation.

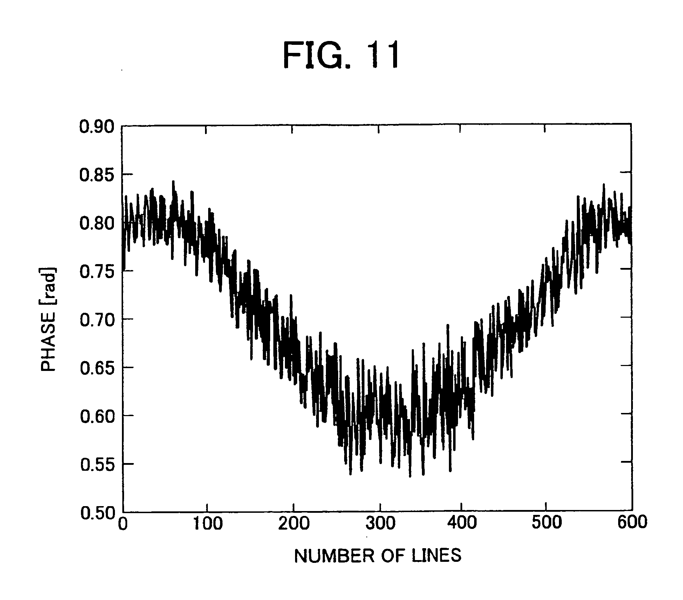

In the first embodiment, Fig. 11 is a graph of a change of a phase of a predetermined point of the tested object 151 having highest brightness in the main scanning direction while the tested object 151 detected by the phase detector 603 makes one rotation. In Fig. 11, the X axis indicates a number of sub-scanning lines. In other words, while the tested object 151 makes one rotation, the phase detector 603 obtains 600 lines. The noise removing unit 604 removes noise, by averaging near 30 lines that are five percent of 600 lines, in each line.

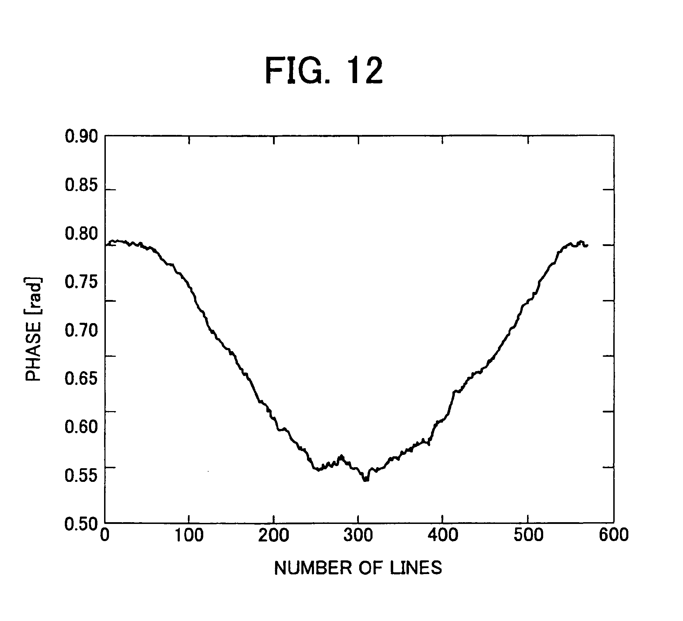

Fig. 12 is a graph of a change of a phase of a predetermined cycle after the noise removing unit 604 removes noise. The noise removing unit 604 according to the first embodiment can remove noise as shown in Fig. 12. In the first embodiment, a method used by the noise removing unit 604 to remove noise is not limited to the above method, and any method can be used.

The imaging position controller 605 has a destination position calculator 611 that calculates a position of the moving destination of the line sensor 102 based on a changed of the detected phase, thereby controlling the line sensor 102 to move to the calculated position. A principle of calculating a movement destination is explained.

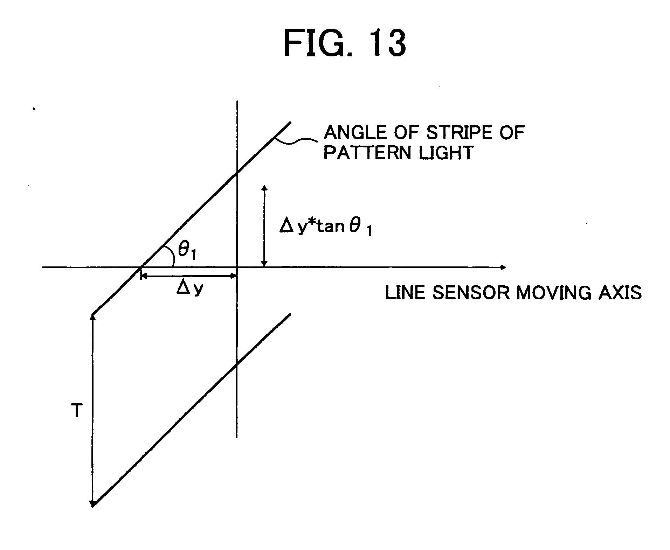

Fig. 13 is a schematic for explaining a change of a stripe when a position of the line sensor 102 is controlled. As shown in Fig. 13, T represents a predetermined cycle indicating a change of brightness of the pattern light, and $\theta_1$ represents an angle of a direction of the stripe of the pattern light from the sub-scanning. A moving quantity of the line sensor 102 in the sub-scanning direction is expressed as $\Delta y$. In this case, the moving quantity of the stripe of the pattern light in the main scanning direction of the line sensor 102 becomes $\Delta y * \tan\theta_1$.

A mapping function of a position y at which the line sensor 102 is installed and a phase $\phi$ of a predetermined frequency component at this position is set as $\phi(y)$. This $\phi(y)$ is obtained as the expression (1) using the above variables.

$$\phi(y) = 2\pi * y * \tan(\theta_1)/T \qquad\qquad (1)$$

A phase of a reflection light that the line sensor 102 images at the position of the tested object is expressed as $\varphi(y)$.

A phase of the imaged position is expressed as $\varphi(y)$. A position of the line sensor 102 is controlled so that the following expression is established for $\phi$ and $\varphi$.

$$\varphi(y) - \phi(y) = K \qquad\qquad\qquad (2)$$

With the above arrangement, the line sensor 102 can follow a movement of the tested object 151 due to an eccentricity, so that the line sensor 102 can keep a relative positional relationship at a constant level. A variable K is a constant representing an observation condition.

When the expression (2) is substituted for the expression (1), $2\pi * y * \tan(\theta_1)/T - \varphi(y) = K$ is established. y is then solved.

$$y = \{K + \varphi(y_{now})\} * T / \{2\pi * \tan(\theta_1)\} \qquad\qquad (3)$$

Because $\varphi(y_{now})$ is a phase imaged by the line sensor 102, the position y as a moving destination of the line sensor 102 is specified. In other word, the destination position calculator 611 can calculate a position of the moving destination from the input phase, by using the expression (3). Any other method other than the expression (3) can be used to calculate a position of the moving destination from the change of the pattern light.

The imaging position controller 605 controls the line sensor to move to the position calculated by the destination position calculator 611. Accordingly, the line sensor 102 can follow a movement of the rotating tested object 151 such as an eccentricity. The imaging position controller 605 can keep constant a relative distance between the position of the tested object 151 and the position of the line sensor 102. Therefore, a defect of the tested object 151 can be detected in high precision.

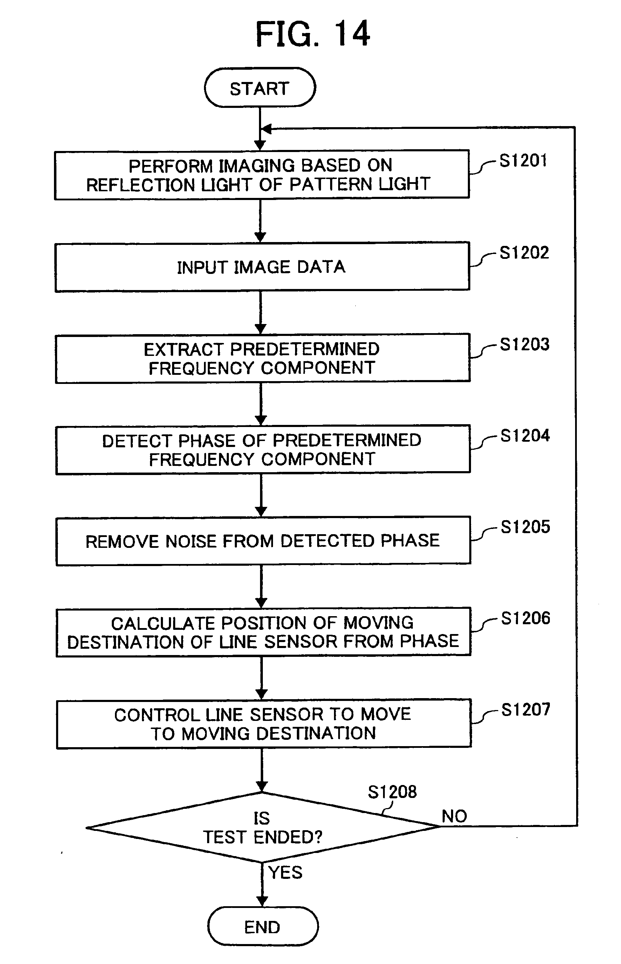

The process control, from the imaging by the line sensor 102 until the moving of the line sensor 102, carried out by the surface-defect inspection apparatus 100 having the above configuration according the present invention is explained below. Fig. 14 is a flowchart of a procedure of the above process carried out by the surface-defect inspection apparatus 100 according to the first embodiment. During a period while the process described later is carried out, the line light source 101 is always irradiating a pattern light.

First, the line sensor 102 images the tested object 151 to which the line light source 101 irradiates a pattern light (step S1201).

Next, the input processor 601 inputs a signal indicating image data input by the line sensor 102 (step S1202).

The bandpass filter 602 filters the image data input by the input processor 601, thereby extracting a predetermined frequency component (step S1203). Although not shown, the input processor 601 inputs image data to the lowpass filter 606 as well. After the lowpass filter 606 carries out the filtering, the defect-inspection image processor 607 and the defect-inspection determining unit 608 inspect a defect.

The phase detector 603 detects a phase of an extracted predetermined frequency component (step S1204). The noise removing unit 604 removes noise from the detected phase (step 51205).

The destination position calculator 611 calculates a position of the moving destination of the line sensor 102, from the noise-removed phase (step S1206).

The imaging position controller 605 controls the line sensor 102 to move to the calculated moving destination (step S1207).

The surface-defect inspection apparatus 100 determines whether the tested object 151 has been tested (step S1208). The end of the test can be determined based on whether the whole surface of the tested object 151 has been tested after making one rotation.

When it is determined that the test of the surface-defect inspection apparatus 100 has not yet ended (NO at step S1208), the line sensor images the tested object 151 (step S1201). When it is determined that the surface-defect inspection apparatus 100 has ended the test (YES at step S1208), the process ends.

In the first embodiment, the line sensor 102 images the tested object 151 in the main scanning direction orthogonal with the sub-scanning direction in which the tested object 151 moves. However, the one-dimensional imaging unit such as the line sensor 102 is not limited to image the tested object in a direction orthogonal with the moving direction of the tested object, and can move in any direction obliquely crossing the moving direction. This is because when the one-dimensional imaging unit moves to a direction obliquely crossing the moving direction of the tested object, a change of brightness of the pattern light can be detected when the distance between the one-dimensional imaging unit and the tested object changes.

In the first embodiment, a change of the position of the tested object 151 is detected based on a change of brightness in the sub-scanning direction of the pattern light. However, instead of the change of brightness in the sub-scanning direction of the pattern light, a change of color can be also used.

In the first embodiment, a change of a relative distance between the position of the line sensor 102 and the position of the tested object 151 can be detected from the brightness of the imaged line image data. Therefore, a movement of the line sensor 102 can be controlled to keep constant the relative distance. Accordingly, the surface-defect inspection apparatus 100 can detect the defect of the tested object in high precision.

In the first embodiment, a position of the imaged pattern light can be detected from the phase component detected by the phase detector 603. Therefore, a position of the line sensor 102 can be controlled, without being affected by the change of a reflection rate of the tested object 151 or the change of brightness of the light source.

While the cycle of the brightness of the pattern light is set ten or more times of the size of the defect, thereby suppressing the reduction of the defect detection precision, the suppressing method is not limited to that described in the first embodiment. An irradiation of the pattern light to an area other than the defect measurement area is explained in a second embodiment of the present invention. A surface-defect inspection apparatus according to the second embodiment includes a configuration substantially equivalent to the configuration shown in Fig. 1 according to the first embodiment. Only differences are explained in the following explanations.

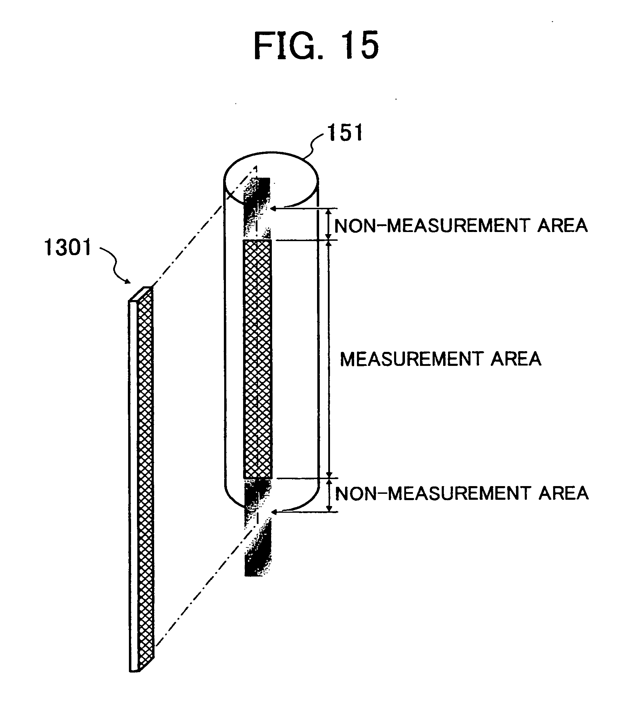

Fig. 15 is a schematic for explaining a state that a line light source 1301 according to the second embodiment irradiates a pattern light to the tested object 151. As shown in Fig. 15, the line light source 1301 irradiates a light having no pattern to a measurement area, and irradiates a pattern light to a non-measurement area. This non-measurement area is an area in which a defect of the tested object 151 does not need to be detected. In the second embodiment, non-measurement areas are provided at both sides of the tested object 151.

When the line light source 1301 irradiates the light to the measurement area, a measurement is possible like in the conventional manner, and when the line light source 1301 irradiates a pattern light to the non-measurement area, a movement of the line sensor 102 can be controlled.

The pattern light irradiated in the second embodiment includes a stripe having different brightnesses in a sub-scanning oblique direction, like in the first embodiment. A predetermined distance in which brightness of the stripe changes does not need to be set to ten or more times of the size of the defect, like in the first embodiment. This distance can be further decreased. This is because the stripe is provided in the non-measurement area, and a defect is not detected in the non-measurement area.

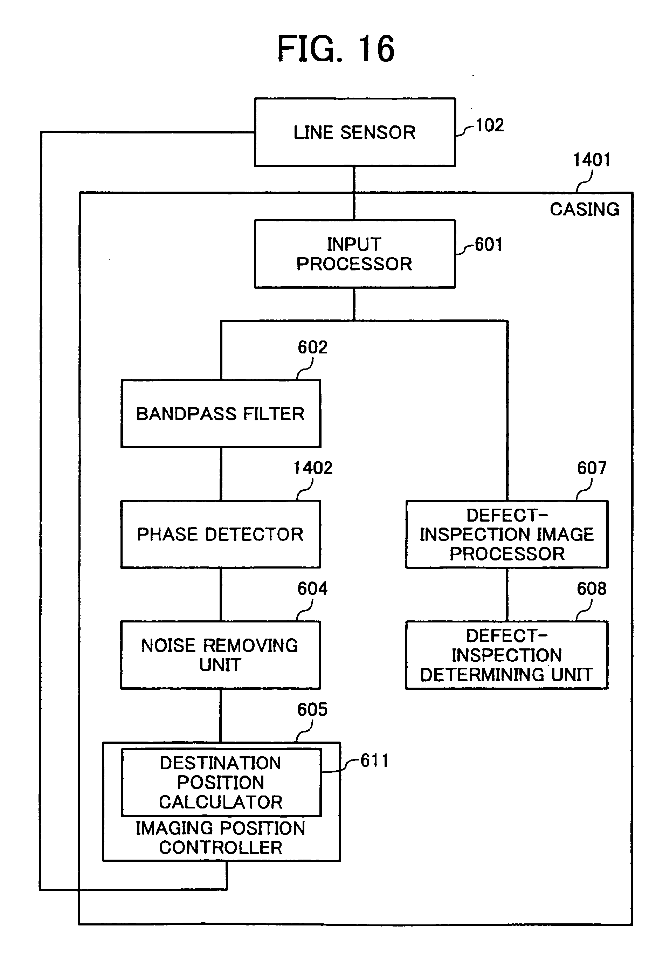

Fig. 16 is a block diagram of a configuration of a casing 1401 according to the second embodiment. The casing 1401 is different from the casing 104 according to the first embodiment in that the lowpass filter 606 is deleted and that the phase detector 603 is changed to a phase detector 1402 having a different process. In the following explanations, constituent elements identical with those of the first embodiment are assigned with like reference numerals, and their explanations will be omitted. The lowpass filter 606 according to the first embodiment is excluded, because a frequency component of the pattern light does not need to be removed in the second embodiment.

The phase detector 1402 detects a moving phase from the imaged data of the non-measurement area in the filtered frequency component. Explanations of the phase detector 1402 are omitted because other processes are similar to those processed by the phase detector 603.

In the surface-defect inspection apparatus according to the second embodiment, the effect similar to that obtained from the first embodiment is obtained because the pattern light is irradiated to the outside of the measurement area, and a defect can be detected in higher precision because there is no erroneous detection of a defect due to the pattern light.

The surface defect inspection program executed by the surface-defect inspection apparatus described above can be provided by being incorporated in a read only memory (ROM) or the like in advance. The casing of the surface-defect inspection apparatus includes a controller such as a central processing unit (CPU), a memory device such as a ROM or a random access memory (RAM), an external memory unit such as a hard-disk drive (HDD) or a compact disk (CD) drive unit, a display device such as a display unit, and an input device such as a keyboard and a mouse. The casing can also include a hardware configuration using a normal computer.

A surface defect inspection program executed by the surface-defect inspection apparatus according to the second embodiment can be provided by being recorded into a computer-readable recording medium such as CD-ROM, a flexible disk (FD), a compact disk recordable (CD-R), and a digital versatile disk (DVD), in an installable or executable format.

The surface defect inspection program executed by the surface-defect inspection apparatus according to the second embodiment can be stored into a computer connected to a network such as the Internet, and can be provided by downloading the program via the network. The surface defect inspection program executed by the surface-defect inspection apparatus according to the second embodiment can be also provided or distributed via the network such as the Internet.

The surface defect inspection program executed by the surface-defect inspection apparatus according to the second embodiment has a module configuration including the above units (the input processor, the bandpass filter, the phase detector, the noise removing unit, the imaging position controller (the lowpass filter), the defect-inspection image processor, and the defect-inspection determining unit). As actual hardware, the CPU reads the surface defect inspection program from the memory medium, and executes this program, thereby loading each unit onto the main memory device. The input processor, the bandpass filter, the phase detector, the noise removing unit, the imaging position controller (the lowpass filter), the defect-inspection image processor, and the defect-inspection determining unit are generated on the main memory device.

The present invention has an object of detecting a defect in high precision by controlling constant the relative positional relationship formed by a regular reflection light between an irradiating unit (such as a line light source), a tested object (such as a photosensitive drum), and a one-dimensional imaging unit (such as a line sensor). In the above explanations, the one-dimensional imaging unit is moved to change the relative positional relation. However, it is needless to mention that there is a method of moving the irradiating unit and the tested object after detecting a change of a relative position of the pattern light, and also a method obtaining the equivalent effect by controlling a reflection angle using a reflecting unit additionally installed on the path.

According to an aspect of the present invention, to achieve the above object, a moving unit is controlled to keep constant a distance between a one-dimensional imaging unit and an inspection position of a tested object, from a change of brightness or color of the taken one-dimensional image, thereby detecting a defect of the tested object in high precision.

According to another aspect of the present invention, a pattern light is irradiated to an area other than a tested area, and a light not including a pattern is irradiated to the tested area. Therefore, a defect of the tested object can be detected in higher precision.

According to still another aspect of the present invention, a change of a distance between an inspection position of a tested object and a position of a one-dimensional imaging unit can be detected from a change of a phase of the obtained one-dimensional image. Therefore, a distance between these positions can be easily maintained constant.

According to still another aspect of the present invention, by controlling the position of a one-dimensional imaging unit, a distance between the inspection position of the tested object and the distance of a one-dimensional imaging unit can be kept constant. Therefore, a defect of the tested object can be detected in higher precision.

According to still another aspect of the present invention, a position of a moving destination of a one-dimensional imaging unit can be calculated. Therefore, control of a position of the one-dimensional imaging unit becomes easy.

According to still another aspect of the present invention, a moving direction of a one-dimensional imaging unit can be specified easily, regardless of the installation position of the one-dimensional imaging unit.

According to still another aspect of the present invention, a change of a phase is detected after extracting a predetermined frequency component. Therefore, an inspection position of a tested object and a position of a one-dimensional imaging unit can be detected in high precision, without having the influence of other frequency component.

According to still another aspect of the present invention, control of a movement of a one-dimensional imaging unit becomes easy based on the guide of a guiding unit.

According to still another aspect of the present invention, a defect of the surface of a tested object is inspected in a one-dimensional image from which a predetermined frequency component is removed. Therefore, erroneous detections of a defect due to a pattern light can be decreased.

According to still another aspect of the present invention, a cycle of brightness of a pattern light and a size of a detected defect are differentiated. Therefore, erroneous detections of a defect due to a pattern light can be decreased.

According to still another aspect of the present invention, to achieve the object, a moving unit is controlled to keep constant a distance between a one-dimensional imaging unit and an inspection position of a tested object, from a change of brightness or color of the taken one-dimensional image, thereby detecting a defect of the tested object in high precision.

According to still another aspect of the present invention, a pattern light is irradiated to an area other than a tested area, and a light not including a pattern is irradiated to the tested area. Therefore, a defect of the tested object can be detected in higher precision.

According to still another aspect of the present invention, a change of a distance between an inspection position of a tested object and a position of a one-dimensional imaging unit can be detected from a change of a phase of the obtained one-dimensional image. Therefore, a distance between these positions can be easily maintained constant.

According to still another aspect of the present invention, by controlling the position of a one-dimensional imaging unit, a distance between the inspection position of the tested object and the distance of a one-dimensional imaging unit can be kept constant. Therefore, a defect of the tested object can be detected in higher precision.

According to still another aspect of the present invention, a position of a moving destination of a one-dimensional imaging unit can be calculated. Therefore, control of a position of the one-dimensional imaging unit becomes easy.

According to still another aspect of the present invention, a moving direction of a one-dimensional imaging unit can be specified easily, regardless of the installation position of the one-dimensional imaging unit.

According to still another aspect of the present invention, a change of a phase is detected after extracting a predetermined frequency component. Therefore, an inspection position of a tested object and a position of a one-dimensional imaging unit can be detected in high precision, without receiving the influence of other frequency component.

According to still another aspect of the present invention, control of a movement of a one-dimensional imaging unit becomes easy based on the guide of a guiding unit.

According to still another aspect of the present invention, a defect of the surface of a tested object is inspected in a one-dimensional image from which a predetermined frequency component is removed. Therefore, erroneous detections of a defect due to a pattern light can be decreased.

According to still another aspect of the present invention, a cycle of brightness of a pattern light and a size of a detected defect are differentiated. Therefore, erroneous detections of a defect due to a pattern light can be decreased.

According to still another aspect of the present invention, there is provided a surface defect detection program capable of causing a computer to execute a surface defect inspection method.

Although the invention has been described with respect to a specific embodiment for a complete and clear disclosure, the appended claims are not to be thus limited but are to be construed as embodying all modifications and alternative constructions that may occur to one skilled in the art that fairly fall within the scope of the claims as appended.

**Claims**

1. A surface-defect inspection apparatus comprising:

   an irradiating unit (101, 1301) arranged to irradiate a pattern of light, having brightness or color changed in an inspection moving direction, to an inspection position of an inspection target object, wherein the inspection position is moved in the inspection moving direction following a lapse of time;
   a one-dimensional imaging unit (102) arranged to carry out a one-dimensional imaging of the pattern of light irradiated by the irradiating unit (101, 1301) and reflected from the inspection position to a direction crossing the inspection moving direction;
   a change detecting unit (603) arranged to detect a change of brightness or color from a one-dimensional image obtained by the one-dimensional imaging unit (102);
   a control unit (605) arranged to control a moving unit that is adapted to move the inspection target object or the one-dimensional imaging unit (102), to keep constant a distance between the inspection position of the inspection target object and the one-dimensional imaging unit (102), based on a change of the brightness or color detected by the change detecting unit (603); and
   a defect inspection determining unit (608) arranged to detect a defect based on the one-dimensional image obtained by the one-dimensional imaging unit (102).

2. A surface-defect inspection apparatus according to claim 1, wherein the irradiating unit (101, 1301) is arranged to irradiate the pattern of light to an area other than a measurement area of the inspection target object in which a presence of a defect on the surface of the inspection target object is measured.

3. A surface-defect inspection apparatus according to claim 1 or 2, wherein the irradiating unit (101, 1301) is arranged to irradiate the pattern of light of which brightness is equal in a direction oblique to the inspection moving direction and in which brightness changes in a predetermined cycle in a direction perpendicular to the inspection moving direction.

4. A surface-defect inspection apparatus according to claim 3, wherein the control unit (605) includes
   a destination position calculating unit (611) arranged to calculate a position of a moving destination of the one-dimensional imaging unit (102) at which a distance between this position and a position at which the inspection target object is inspected becomes a predetermined length, from a change of brightness or color of the one-dimensional image detected by the change detecting unit (603), and
the control unit (605) is arranged to control the one-dimensional imaging unit (102) to move to the position calculated by the destination position calculating unit (611).

5. A surface-defect inspection apparatus according to claim 4, wherein
the change detecting unit (603) is arranged to detect a change of brightness as a phase changed in the predetermined frequency component, from a one-dimensional image taken by the one-dimensional imaging unit (102), and
the control unit (605) is arranged to control the one-dimensional imaging unit (102) to move so as to further change the phase to a direction in which the phase detected by the change detecting unit (603) changes.

6. A surface-defect inspection apparatus according to claim 5, further comprising a frequency component extracting unit (602) arranged to extract a predetermined frequency component indicating the predetermined frequency, from the one-dimensional image taken by the one-dimensional imaging unit (102), wherein
the change detecting unit (603) is arranged to detect a change of a phase of the predetermined frequency component extracted by the frequency component extracting unit (602), and
the position control unit is arranged to control the one-dimensional imaging unit (102) to move by a movement quantity of the one-dimensional imaging unit (102) obtained from the calculation of the phase change of the predetermined frequency component detected by the change detecting unit (603).

7. A surface-defect inspection apparatus according to claim 6, further comprising a guiding unit (103) arranged to guide the one-dimensional imaging unit (102) to a direction parallel with the inspection moving direction to which the inspection target object moves, wherein
the control unit is arranged to control the one-dimensional imaging unit (102) to move to a direction guided by the guiding unit (103).

8. A surface-defect inspection apparatus according to claim 7, further comprising:

   a frequency component removing unit (606) arranged to remove a frequency component of the predetermined cycle from the one-dimensional image taken by the one-dimensional imaging unit (102); and
   a defect inspecting unit (607) arranged to inspect a defect of the surface of the inspection target object from the one-dimensional image from which the frequency component is removed by the frequency component removing unit (606).

9. A surface-defect inspection apparatus according to any one of claims 1 to 8, wherein the irradiating unit (101, 1301) has a cycle of brightness of the irradiated pattern light to be ten or more times of a defect size to be detected from the inspection target object.

10. A surface-defect inspection method comprising:

    irradiating a pattern of light, having brightness or color changed in an inspection moving direction, with an irradiating unit onto an inspection position of an inspection target object, wherein the inspection position is moved in the inspection moving direction following a lapse of time;
    carrying out a one-dimensional imaging of the pattern of light irradiated by the irradiating unit and reflected from the inspection position to a direction crossing the inspection moving direction using a one-dimensional imaging unit;
    detecting a change of brightness or color from a one-dimensional image obtained by the one-dimensional imaging unit;
    controlling movement of the inspection target object or the one-dimensional imaging unit, to keep constant a distance between the inspection position of the inspection target object and the one-dimensional imaging unit, based on a change of the detected brightness or color; and
    dectecting a defect based on the one-dimensional image obtained by the one-dimensional imaging unit.

11. A surface-defect inspection method according to claim 10, wherein the irradiating includes irradiating the pattern of light to an area other than a measurement area of the inspection target object in which a presence of a defect on the surface of the inspection target object is measured.

12. A surface-defect inspection method according to claim 10 or 11, wherein the irradiating includes irradiating the pattern of light of which brightness is equal in a direction oblique to the inspection moving direction and in which brightness changes in a predetermined cycle in a direction perpendicular to the inspection moving direction.

13. A surface-defect inspection method according to claim 12, wherein the controlling includes
calculating a position of a moving destination of the one-dimensional imaging unit at which a distance between this position and a position at which the inspection target object is inspected becomes a predetermined length, from a change of brightness or color of the one-dimensional image detected by the change detecting unit, and
controlling the one-dimensional imaging unit to move to the calculated position .

14. A surface-defect inspection method according to claim 13, wherein
the detecting includes detecting a change of brightness as a phase changed in the predetermined frequency component, from a one-dimensional image taken by the one-dimensional imaging unit, and
the controlling includes controlling the one-dimensional imaging unit to move so as to further change the phase to a direction in which the phase detected at the detecting changes.

15. A surface-defect inspection method according to claim 14, further comprising extracting a predetermined frequency component indicating the predetermined frequency, from the one-dimensional image taken by the one-dimensional imaging unit, wherein
the detecting includes detecting a change of a phase of the extracted predetermined frequency component, and
the controlling includes controlling the one-dimensional imaging unit to move by a movement quantity of the one-dimensional imaging unit obtained from the calculation of the detected phase change of the predetermined frequency.

16. A surface-defect inspection method according to claim 15, further comprising guiding the one-dimensional imaging unit to a direction parallel with the inspection moving direction to which the inspection target object moves, wherein
the controlling includes controlling the one-dimensional imaging unit to move to a guided direction.

17. A surface-defect inspection method according to claim 16, further comprising:

    removing a frequency component of the predetermined cycle from the one-dimensional image taken by the one-dimensional imaging unit; and
    inspecting a defect of the surface of the inspection target object from the one-dimensional image from which the frequency component has been removed.

18. A surface-defect inspection method according to any one of claims 10 to 17, wherein the irradiating unit has a cycle of brightness of the irradiated pattern of light to be ten or more times of a defect size to be detected from the inspection target object.

19. A computer program product that causes a computer to execute a method according to any one of claims 10-18.


**Patentansprüche**

1. Oberflächendefekt-Inspektionsvorrichtung, die umfasst:

    eine Bestrahlungseinheit (101, 1301), die dazu ausgelegt ist, ein Lichtmuster abzustrahlen, das eine Helligkeit oder Farbe hat, die sich in einer Inspektionsbewegungsrichtung zu einer Inspektionsposition eines Inspektionszielobjekts ändert, wobei die Inspektionsposition im Verlauf der Zeit in der Inspektionsbewegungsrichtung bewegt wird;
    eine eindimensionale Bilderzeugungseinheit (102), die dazu ausgelegt ist, eine eindimensionale Bilderzeugung aus dem von der Bestrahlungseinheit (101, 1301) abgestrahlten Lichtmuster, das von der Inspektionsposition in einer die Inspektionsbewegungsrichtung kreuzenden Richtung reflektiert wird, auszuführen;
    eine Änderungsdetektionseinheit (603), die dazu ausgelegt ist, eine Helligkeits- oder Farbänderung aus einem eindimensionalen Bild, das durch die eindimensionale Bilderzeugungseinheit (102) erhalten wird, zu detektieren;
    eine Steuereinheit (605), die dazu ausgelegt ist, eine Bewegungseinheit zu steuern die dazu ausgelegt ist, auf der Grundlage einer durch die Änderungsdetektionseinheit (603) detektierten Helligkeits- oder Farbänderung das Inspektionszielobjekt oder die eindimensionale Bilderzeugungseinheit (102) so zu bewegen, dass ein Abstand zwischen der Inspektionsposition des Inspektionszielobjekts und der eindimensionalen Bilderzeugungseinheit (102) konstant bleibt; und
    eine Defektinspektions-Bestimmungseinheit (608), die dazu ausgelegt ist, einen Defekt anhand des von der eindimensionalen Bilderzeugungseinheit (102) erhaltenen eindimensionalen Bildes zu detektieren.

2. Oberflächendefekt-Inspektionsvorrichtung nach Anspruch 1, wobei die Bestrahlungseinheit (101, 1301) dazu ausgelegt ist, das Lichtmuster in einen Bereich zu strahlen, der von einem Messbereich des Inspektionszielobjekts, in dem das Vorhandensein eines Defekts auf der Oberfläche des Inspektionszielobjekts gemessen wird, verschieden ist.

3. Oberflächendefekt-Inspektionsvorrichtung nach Anspruch 1 oder 2, wobei die Bestrahlungseinheit (101, 1301) dazu ausgelegt ist, ein Lichtmuster abzustrahlen, dessen Helligkeit in einer Richtung schräg zu der Inspektionsbewegungsrichtung gleich bleibt und dessen Helligkeit sich in einer Richtung senkrecht zu der Inspektionsbewegungsrichtung in einem vorgegebenen Zyklus ändert.

4. Oberflächendefekt-Inspektionsvorrichtung nach Anspruch 3, wobei die Steuereinheit (605) umfasst:

   eine Zielposition-Berechnungseinheit (611), die dazu ausgelegt ist, eine Position eines sich bewegenden Ziels der eindimensionalen Bilderzeugungseinheit (102), an der ein Abstand zwischen dieser Position und einer Position, an der das Inspektionszielobjekt untersucht wird, gleich einer vorgegebenen Länge wird, aus einer durch die Änderungsdetektionseinheit (603) detektierten Helligkeits- oder Farbänderung der eindimensionalen Bilderzeugungseinheit zu berechnen, und
   die Steuereinheit (605) dazu ausgelegt ist, die eindimensionale Bilderzeugungseinheit (102) so zu steuern, dass sie sich in die durch die Zielpositions-Berechnungseinheit (611) berechnete Position bewegt.

5. Oberflächendefekt-Inspektionsvorrichtung nach Anspruch 4, wobei
   die Änderungsdetektionseinheit (603) dazu ausgelegt ist, eine Änderung der Helligkeit als eine in der vorgegebenen Frequenzkomponente geänderte Phase aus einem durch die eindimensionale Bilderzeugungseinheit (102) aufgenommenen eindimensionalen Bild zu detektieren und
   die Steuereinheit (605) dazu ausgelegt ist, die eindimensionale Bilderzeugungseinheit (102) so zu steuern, dass sie sich bewegt, um so die Phase weiterhin in einer Richtung zu ändern, in der sich die durch die Änderungsdetektionseinheit (603) detektierte Phase ändert.

6. Oberflächendefekt-Inspektionsvorrichtung nach Anspruch 5, die ferner eine Frequenzkomponenten-Extraktionseinheit (602) umfasst, die dazu ausgelegt ist, eine vorgegebene Frequenzkomponente, die die vorgegebene Frequenz angibt, aus dem durch die eindimensionale Bilderzeugungseinheit (102) aufgenommenen eindimensionalen Bild zu extrahieren, wobei
   die Änderungsdetektionseinheit (603) dazu ausgelegt ist, eine Änderung einer Phase der vorgegebenen Frequenzkomponente, die durch die Frequenzkomponenten-Extraktionseinheit (602) extrahiert wird, zu detektieren, und
   die Positionssteuereinheit dazu ausgelegt ist, die eindimensionale Bilderzeugungseinheit (102) so zu steuern, dass sie sich um einen Bewegungsbetrag der eindimensionalen Bilderzeugungseinheit (102) bewegt, der aus der Berechnung der durch die Änderungsdetektionseinheit (603) detektierten Phasenänderung der vorgegebenen Frequenzkomponente erhalten wird.

7. Oberflächendefekt-Inspektionsvorrichtung nach Anspruch 6, die ferner eine Führungseinheit (103) umfasst, die dazu ausgelegt ist, die eindimensionale Bilderzeugungseinheit (102) in einer Richtung parallel zu der Inspektionsbewegungsrichtung, in der sich das Inspektionszielobjekt bewegt, zu führen, wobei
   die Steuereinheit dazu ausgelegt ist, die eindimensionale Bilderzeugungseinheit (102) so zu steuern, dass sie sich in einer durch die Führungseinheit (103) geführten Richtung bewegt.

8. Oberflächendefekt-Inspektionsvorrichtung nach Anspruch 7, die ferner umfasst:

   eine Frequenzkomponenten-Entfernungseinheit (606), die dazu ausgelegt ist, eine Frequenzkomponente des vorgegebenen Zyklus aus dem durch die eindimensionale Bilderzeugungseinheit (102) aufgenommenen eindimensionalen Bild zu entfernen; und
   eine Defektinspektionseinheit (607), die dazu ausgelegt ist, einen Defekt der Oberfläche des Inspektionszielobjekts aus dem eindimensionalen Bild, aus dem die Frequenzkomponente durch die Frequenzkomponenten-Entfernungseinheit (606) entfernt worden ist, zu untersuchen.

9. Oberflächendefekt-Inspektionsvorrichtung nach einem der Ansprüche 1 bis 8, wobei die Bestrahlungseinheit (101, 1301) einen Helligkeitszyklus des abgestrahlten Musterlichts besitzt, der wenigstens gleich der zehnfachen Defektgröße ist, die an dem Inspektionszielobjekt detektiert werden soll.

10. Oberflächendefekt-Inspektionsverfahren, das umfasst:

Strahlen eines Lichtmusters, dessen Helligkeit oder Farbe sich in einer Inspektionsbewegungsrichtung ändert, mit einer Bestrahlungseinheit auf eine Inspektionsposition eines Inspektionszielobjekts, wobei die Inspektionsposition im Verlauf der Zeit in der Inspektionsbewegungsrichtung bewegt wird;

Ausführen einer eindimensionalen Bilderzeugung des von der Bestrahlungseinheit abgestrahlten und von der Inspektionsposition in einer die Inspektionsbewegungsrichtung kreuzenden Richtung reflektierten Lichtmusters unter Verwendung einer eindimensionalen Bilderzeugungseinheit;

Detektieren einer Helligkeits- oder Farbänderung aus einem durch die eindimensionale Bilderzeugungseinheit erhaltenen eindimensionalen Bild;

Steuern der Bewegung des Inspektionszielobjekts oder der eindimensionalen Bilderzeugungseinheit, um anhand einer Änderung der detektierten Helligkeit oder Farbe einen Abstand zwischen der Inspektionsposition des Inspektionszielobjekts und der eindimensionalen Bilderzeugungseinheit konstant zu halten; und

Detektieren eines Defekts anhand des durch die eindimensionale Bilderzeugungseinheit erhaltenen eindimensionalen Bildes.

11. Oberflächendefekt-Inspektionsverfahren nach Anspruch 10, wobei das Abstrahlen das Abstrahlen des Lichtmusters in einen Bereich umfasst, der von einem Messbereich des Inspektionszielobjekts, in dem das Vorhandensein eines Defekts auf der Oberfläche des Inspektionszielobjekts gemessen wird, verschieden ist.

12. Oberflächendefekt-Inspektionsverfahren nach Anspruch 10 oder 11, wobei das Abstrahlen das Abstrahlen des Lichtmusters, dessen Helligkeit in einer Richtung schräg zu der Inspektionsbewegungsrichtung gleich bleibt und dessen Helligkeit sich in einer Richtung senkrecht zu der Inspektionsbewegungsrichtung in einem vorgegebenen Zyklus ändert, umfasst.

13. Oberflächendefekt-Inspektionsverfahren nach Anspruch 12, wobei das Steuern umfasst:

Berechnen einer Position eines sich bewegenden Ziels der eindimensionalen Bilderzeugungseinheit, an der ein Abstand zwischen dieser Position und einer Position, an der das Inspektionszielobjekt untersucht wird, gleich einer vorgegebenen Länge wird, anhand einer durch die Änderungsdetektionseinheit detektierten Helligkeits- oder Farbänderung des eindimensionalen Bildes, und

Steuern der eindimensionalen Bilderzeugungseinheit, damit sie sich in die berechnete Position bewegt.

14. Oberflächendefekt-Inspektionsverfahren nach Anspruch 13, wobei

das Detektieren das Detektieren einer Helligkeitsänderung als eine in der vorgegebenen Frequenzkomponente geänderte Phase aus einem durch die eindimensionale Bilderzeugungseinheit aufgenommenen eindimensionalen Bild umfasst, und

das Steuern das Steuern der eindimensionalen Bilderzeugungseinheit in der Weise, dass sie sich so bewegt, dass die Phase in einer Richtung, in der sich die durch die Detektion detektierte Phase ändert, weiterhin geändert wird umfasst.

15. Oberflächendefekt-Inspektionsverfahren nach Anspruch 14, das ferner das Extrahieren einer die vorgegebene Frequenz angebenden vorgegebenen Frequenzkomponente aus dem durch die eindimensionale Bilderzeugungseinheit aufgenommenen eindimensionalen Bild umfasst, wobei

das Detektieren das Detektieren einer Änderung einer Phase der extrahierten vorgegebenen Frequenzkomponente umfasst und

das Steuern das Steuern der eindimensionalen Bilderzeugungseinheit umfasst, damit sie sich um einen Bewegungsbetrag der eindimensionalen Bilderzeugungseinheit bewegt, der aus der Berechnung der detektierten Phasenänderung der vorgegebenen Frequenz erhalten wird.

16. Oberflächendefekt-Inspektionsverfahren nach Anspruch 15, das ferner das Führen der eindimensionalen Bilderzeugungseinheit in einer Richtung parallel zu der Inspektionsbewegungsrichtung, in der sich das Inspektionszielobjekt bewegt, umfasst, wobei

das Steuern das Steuern der eindimensionalen Bilderzeugungseinheit umfasst, damit sie sich in einer geführten Richtung bewegt.

**17.** Oberflächendefekt-Inspektionsverfahren nach Anspruch 16, das ferner umfasst:

Entfernen einer Frequenzkomponente des vorgegebenen Zyklus aus dem eindimensionalen Bild, das durch die eindimensionale Bilderzeugungseinheit aufgenommen wird; und

Untersuchen eines Defekts der Oberfläche des Inspektionszielobjekts von dem eindimensionalen Bild, aus dem die Frequenzkomponente entfernt worden ist.

**18.** Oberflächendefekt-Inspektionsverfahren nach einem der Ansprüche 10 bis 17, wobei die Bestrahlungseinheit einen Helligkeitszyklus des abgestrahlten Lichtmusters hat, der wenigstens zehnmal größer ist als eine an dem Inspektionszielobjekt zu detektierende Defektgröße.

**19.** Computerprogrammprodukt, das einen Computer dazu veranlasst, ein Verfahren nach einem der Ansprüche 10-18 auszuführen.

**Revendications**

**1.** Appareil d'inspection de défauts de surface comprenant :

une unité d'irradiation (101, 1301) agencée pour irradier un motif de lumière, ayant une luminosité ou une couleur changée dans une direction de mouvement d'inspection, sur une position d'inspection d'un objet cible de l'inspection, dans lequel la position d'inspection est déplacée dans la direction de mouvement d'inspection après un laps de temps ;
une unité d'imagerie unidimensionnelle (102) agencée pour effectuer une imagerie unidimensionnelle du motif de lumière irradié par l'unité d'irradiation (101, 1301) et réfléchi de la position d'inspection à une direction croisant la direction de mouvement d'inspection ;
une unité de détection de changement (603) agencée pour détecter un changement de luminosité ou de couleur à partir d'une image unidimensionnelle obtenue par l'unité d'imagerie unidimensionnelle (102) ;
une unité de commande (605) agencée pour commander une unité de déplacement qui est adaptée pour déplacer l'objet cible de l'inspection ou l'unité d'imagerie unidimensionnelle (102), pour maintenir une distance constante entre la position d'inspection de l'objet cible de l'inspection et l'unité d'imagerie unidimensionnelle (102), sur la base d'un changement de la luminosité ou de la couleur détecté par l'unité de détection de changement (603) ; et
une unité de détermination d'inspection de défaut (608) agencée pour détecter un défaut sur la base d'une image unidimensionnelle obtenue par l'unité d'imagerie unidimensionnelle (102).

**2.** Appareil d'inspection de défauts de surface selon la revendication 1, dans lequel l'unité d'irradiation (101, 1301) est agencée pour irradier le motif de lumière sur une zone autre qu'une zone de mesure de l'objet cible de l'inspection dans lequel la présence d'un défaut sur la surface de l'objet cible de l'inspection est mesurée.

**3.** Appareil d'inspection de défauts de surface selon la revendication 1 ou 2, dans lequel l'unité d'irradiation (101, 1301) est agencée pour irradier le motif de lumière dont la luminosité est égale dans une direction oblique à la direction de mouvement d'inspection et dans lequel la luminosité change dans un cycle prédéterminé dans une direction perpendiculaire à la direction de mouvement d'inspection.

**4.** Appareil d'inspection de défauts de surface selon la revendication 3, dans lequel l'unité de commande (605) inclut une unité de calcul de position de destination (611) agencée pour calculer une position d'une destination de déplacement de l'unité d'imagerie unidimensionnelle (102) au niveau de laquelle une distance entre cette position et la position à laquelle l'objet cible de l'inspection est inspecté devient une longueur prédéterminée, à partir d'un changement de luminosité ou de couleur de l'image unidimensionnelle détecté par l'unité de détection de changement (603), et
l'unité de commande (605) est agencée pour commander l'unité d'imagerie unidimensionnelle (102) pour qu'elle se déplace vers la position calculée par l'unité de calcul de position de destination (611).

**5.** Appareil d'inspection de défauts de surface selon la revendication 4, dans lequel
l'unité de détection de changement (603) est agencée pour détecter un changement de luminosité comme une phase changée dans la composante fréquentielle prédéterminée, à partir d'une image unidimensionnelle prise par l'unité d'imagerie unidimensionnelle (102), et

l'unité de commande (605) est agencée pour commander l'unité d'imagerie unidimensionnelle (102) pour qu'elle se déplace afin de changer davantage la phase vers une direction dans laquelle la phase détectée par l'unité de détection de changement (603) change.

**6.** Appareil d'inspection de défauts de surface selon la revendication 5, comprenant en outre une unité d'extraction de composante fréquentielle (602) agencée pour extraire une composante fréquentielle prédéterminée indiquant la fréquence prédéterminée, de l'image unidimensionnelle prise par l'unité d'imagerie unidimensionnelle (102), dans lequel

l'unité de détection de changement (603) est agencée pour détecter un changement d'une phase de la composante fréquentielle prédéterminée extraite par l'unité d'extraction de composante fréquentielle (602), et

l'unité de commande de position est agencée pour commander l'unité d'imagerie unidimensionnelle (102) pour qu'elle se déplace d'une quantité de mouvement de l'unité d'imagerie unidimensionnelle (102) obtenue à partir du calcul du changement de phase de la composante fréquentielle prédéterminée détecté par l'unité de détection de changement (603).

**7.** Appareil d'inspection de défauts de surface selon la revendication 6, comprenant en outre une unité de guidage (103) agencée pour guider l'unité d'imagerie unidimensionnelle (102) vers une direction parallèle à la direction de mouvement d'inspection vers laquelle l'objet cible de l'inspection se déplace, dans lequel

l'unité de commande est agencée pour commander l'unité d'imagerie unidimensionnelle (102) pour qu'elle se déplace vers une direction guidée par l'unité de guidage (103).

**8.** Appareil d'inspection de défauts de surface selon la revendication 7, comprenant en outre :

une unité de suppression de composante fréquentielle (606) agencée pour supprimer une composante fréquentielle du cycle prédéterminé de l'image unidimensionnelle prise par l'unité d'imagerie unidimensionnelle (102) ; et

une unité d'inspection de défaut (607) agencée pour inspecter un défaut de la surface de l'objet cible de l'inspection à partir de l'image unidimensionnelle de laquelle la composante fréquentielle est supprimée par l'unité de suppression de composante fréquentielle (606).

**9.** Appareil d'inspection de défauts de surface selon l'une quelconque des revendications 1 à 8, dans lequel l'unité d'irradiation (101, 1301) a un cycle de luminosité du motif de lumière irradié devant être dix fois ou plus celui d'une taille de défaut devant être détectée à partir de l'objet cible de l'inspection.

**10.** Procédé d'inspection de défauts de surface comprenant :

l'irradiation d'un motif de lumière, ayant une luminosité ou une couleur changée dans une direction de mouvement d'inspection, avec une unité d'irradiation sur une position d'inspection d'un objet cible de l'inspection, dans lequel la position d'inspection est déplacée dans la direction de mouvement d'inspection après un laps de temps ;

l'exécution d'une imagerie unidimensionnelle du motif de lumière irradié par l'unité d'irradiation et réfléchi de la position d'inspection à une direction croisant la direction de mouvement d'inspection en utilisant une unité d'imagerie unidimensionnelle ;

la détection d'un changement de luminosité ou de couleur à partir d'une image unidimensionnelle obtenue par l'unité d'imagerie unidimensionnelle ;

la commande d'un mouvement de l'objet cible de l'inspection ou de l'unité d'imagerie unidimensionnelle, pour maintenir une distance constante entre la position d'inspection de l'objet cible de l'inspection et l'unité d'imagerie unidimensionnelle, sur la base d'un changement de la luminosité ou de la couleur détecté ; et

la détection d'un défaut sur la base de l'image unidimensionnelle obtenue par l'unité d'imagerie unidimensionnelle.

**11.** Procédé d'inspection de défauts de surface selon la revendication 10, dans lequel l'irradiation inclut l'irradiation du motif de lumière sur une zone autre qu'une zone de mesure de l'objet cible de l'inspection dans lequel la présence d'un défaut sur la surface de l'objet cible de l'inspection est mesurée.

**12.** Procédé d'inspection de défauts de surface selon la revendication 10 ou 11, dans lequel l'irradiation inclut l'irradiation du motif de lumière dont la luminosité est égale dans une direction oblique à la direction de mouvement d'inspection et dans lequel la luminosité change dans un cycle prédéterminé dans une direction perpendiculaire à la direction de mouvement d'inspection.

**13.** Procédé d'inspection de défauts de surface selon la revendication 12, dans lequel la commande inclut le calcul d'une position d'une destination de déplacement de l'unité d'imagerie unidimensionnelle au niveau de laquelle une distance entre cette position et la position à laquelle l'objet cible de l'inspection est inspecté devient une longueur prédéterminée, à partir d'un changement de luminosité ou de couleur de l'image unidimensionnelle détecté par l'unité de détection de changement, et la commande de l'unité d'imagerie unidimensionnelle pour qu'elle se déplace vers la position calculée.

**14.** Procédé d'inspection de défauts de surface selon la revendication 13, dans lequel la détection inclut la détection d'un changement de luminosité comme une phase changée dans la composante fréquentielle prédéterminée, à partir d'une image unidimensionnelle prise par l'unité d'imagerie unidimensionnelle, et la commande inclut la commande de l'unité d'imagerie unidimensionnelle pour qu'elle se déplace afin de changer davantage la phase vers une direction dans laquelle la phase détectée lors de la détection change.

**15.** Procédé d'inspection de défauts de surface selon la revendication 14, comprenant en outre l'extraction d'une composante fréquentielle prédéterminée indiquant la fréquence prédéterminée, de l'image unidimensionnelle prise par l'unité d'imagerie unidimensionnelle, dans lequel la détection inclut la détection d'un changement d'une phase de la composante fréquentielle prédéterminée extraite, et la commande inclut la commande de l'unité d'imagerie unidimensionnelle pour qu'elle se déplace d'une quantité de mouvement de l'unité d'imagerie unidimensionnelle obtenue à partir du calcul du changement de phase détecté de la fréquence prédéterminée.

**16.** Procédé d'inspection de défauts de surface selon la revendication 15, comprenant en outre le guidage de l'unité d'imagerie unidimensionnelle vers une direction parallèle à la direction de mouvement d'inspection vers laquelle l'objet cible de l'inspection se déplace, dans lequel la commande inclut la commande de l'unité d'imagerie unidimensionnelle pour qu'elle se déplace vers une direction guidée.

**17.** Procédé d'inspection de défauts de surface selon la revendication 16, comprenant en outre :

la suppression d'une composante fréquentielle du cycle prédéterminé de l'image unidimensionnelle prise par l'unité d'imagerie unidimensionnelle ; et l'inspection d'un défaut de la surface de l'objet cible de l'inspection à partir de l'image unidimensionnelle de laquelle la composante fréquentielle a été supprimée.

**18.** Procédé d'inspection de défauts de surface selon l'une quelconque des revendications 10 à 17, dans lequel l'unité d'irradiation a un cycle de luminosité du motif de lumière irradié devant être dix fois ou plus celui d'une taille de défaut devant être détectée à partir de l'objet cible de l'inspection.

**19.** Produit de programme informatique qui amène un ordinateur à exécuter un procédé selon l'une quelconque des revendications 10 à 18.

# FIG. 1

# FIG. 2

# FIG. 3

(a)　(b)　(c)　(d)　(e)　(f)

# FIG. 4

BRIGHTNESS

0          340mm

DISTANCE IN MAIN
SCANNING DIRECTION

# FIG. 5

# FIG. 6

```
                    ┌─────────────────┐
                    │   LINE SENSOR   │ ⌐102
                    └─────────────────┘
                                                        104
                                                         ⌐
                                                    CASING
        ┌───────────────────────────────────────────────────┐
        │           ┌─────────────────┐                      │
        │           │      INPUT      │ ⌐601                 │
        │           │    PROCESSOR    │                      │
        │           └─────────────────┘                      │
        │                                                    │
        │          602                      606              │
        │           ⌐                        ⌐               │
        │   ┌─────────────────┐     ┌─────────────────┐      │
        │   │ BANDPASS FILTER │     │  LOWPASS FILTER │      │
        │   └─────────────────┘     └─────────────────┘      │
        │                                                    │
        │          603                      607              │
        │           ⌐                        ⌐               │
        │   ┌─────────────────┐     ┌─────────────────┐      │
        │   │ PHASE DETECTOR  │     │     DEFECT-     │      │
        │   └─────────────────┘     │ INSPECTION IMAGE│      │
        │                           │    PROCESSOR    │      │
        │          604              └─────────────────┘      │
        │           ⌐                                        │
        │   ┌─────────────────┐             608              │
        │   │ NOISE REMOVING  │              ⌐               │
        │   │      UNIT       │     ┌─────────────────┐      │
        │   └─────────────────┘     │     DEFECT-     │      │
        │                           │   INSPECTION    │      │
        │          605              │ DETERMINING UNIT│      │
        │           ⌐               └─────────────────┘      │
        │   ┌─────────────────┐                              │
        │   │   DESTINATION   │ ⌐611                         │
        │   │    POSITION     │                              │
        │   │   CALCULATOR    │                              │
        │   ├─────────────────┤                              │
        │   │ IMAGING POSITION│                              │
        │   │   CONTROLLER    │                              │
        │   └─────────────────┘                              │
        └───────────────────────────────────────────────────┘
```

21

# FIG. 7

(A)          (B)    705

PHASE
DEVIATION

151          151

701          703

BRIGHT-LINE     BRIGHT-LINE
702             704

# FIG. 8

(A)          (B)

151          151

801          803

MOVEMENT OF
LINE SENSOR
→
805

IMAGING LINE     IMAGING LINE
802              804

# FIG. 9

34mm

51mm

$\theta = 45°$

# FIG. 10

COMBINED IMAGE OF LINE IMAGES

— ROTATION START LINE

1001

— ROTATION END LINE

ROTATION

MEASURED
ROTATION VIBRATION

PROJECTED PATTERN

# FIG. 11

# FIG. 12

# FIG. 13

ANGLE OF STRIPE OF
PATTERN LIGHT

$\Delta y * \tan \theta_1$

$\theta_1$

$\Delta y$

LINE SENSOR MOVING AXIS

T

# FIG. 14

START

PERFORM IMAGING BASED ON
REFLECTION LIGHT OF PATTERN LIGHT — S1201

INPUT IMAGE DATA — S1202

EXTRACT PREDETERMINED
FREQUENCY COMPONENT — S1203

DETECT PHASE OF PREDETERMINED
FREQUENCY COMPONENT — S1204

REMOVE NOISE FROM DETECTED PHASE — S1205

CALCULATE POSITION OF MOVING
DESTINATION OF LINE SENSOR FROM PHASE — S1206

CONTROL LINE SENSOR TO MOVE
TO MOVING DESTINATION — S1207

IS
TEST ENDED? — S1208   NO

YES

END

# FIG. 15

# FIG. 16

```
                    ┌─────────────────┐
                    │   LINE SENSOR   │ ⌐102
                    └─────────────────┘
                                              ⌐1401
  ┌───────────────────────────────────────────────────────┐
  │                                              CASING    │
  │            ┌─────────────────┐                         │
  │            │      INPUT       │ ⌐601                   │
  │            │   PROCESSOR      │                         │
  │            └─────────────────┘                         │
  │                                                         │
  │         602                                             │
  │   ┌─────────────────┐                                  │
  │   │ BANDPASS FILTER │                                  │
  │   └─────────────────┘                                  │
  │                                                         │
  │          1402                            607           │
  │   ┌─────────────────┐          ┌─────────────────┐     │
  │   │ PHASE DETECTOR  │          │    DEFECT-       │     │
  │   └─────────────────┘          │ INSPECTION IMAGE │     │
  │                                 │   PROCESSOR      │     │
  │          604                    └─────────────────┘     │
  │   ┌─────────────────┐                   608            │
  │   │ NOISE REMOVING  │          ┌─────────────────┐     │
  │   │     UNIT        │          │    DEFECT-       │     │
  │   └─────────────────┘          │  INSPECTION      │     │
  │                                 │ DETERMINING UNIT │     │
  │          605                    └─────────────────┘     │
  │   ┌─────────────────────┐                              │
  │   │  DESTINATION        │ ⌐611                         │
  │   │  POSITION           │                              │
  │   │  CALCULATOR         │                              │
  │   │ IMAGING POSITION    │                              │
  │   │  CONTROLLER         │                              │
  │   └─────────────────────┘                              │
  └───────────────────────────────────────────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004279367 A